# EUROPEAN PATENT APPLICATION

(11) **EP 4 280 686 A1**
(43) Date of publication of application: **22.11.2023**
(21) Application number: 22739753.6
(22) Date of filing: 14.01.2022
(51) Int. Cl.: H04W 36/00, H04W 36/32, H04W 24/10, H04W 84/06

(54) **NTN-RELATED COMMUNICATION**

(30) Priority: 14.01.2021 KR 20210005298
(71) Applicant: LG Electronics Inc., Yeongdeungpo-gu Seoul 07336 (KR)
(72) Inventor: PARK, Jinwoong, Seoul 06772 (KR); HWANG, Jinyup, Seoul 06772 (KR); YANG, Yoonoh, Seoul 06772 (KR); LEE, Sangwook, Seoul 06772 (KR); LIM, Suhwan, Seoul 06772 (KR)
(74) Representative: Mooser, Sebastian Thomas
(86) International application number: PCT/KR2022/000710
(87) International publication number: WO 2022/154560

(57) **Abstract**

On disclosure the present specification provides a method by which a UE performs NTN-related communication. The method may comprise the steps of: receiving, from an NTN serving cell, a measurement configuration for an NTN cell including a measurement configuration for the NTN serving cell; transmitting, to the NTN serving cell, location information and/or propagation delay information about the UE; receiving, from the NTN serving cell, triggering information for triggering the measurement of the NTN serving cell and/or an NTN neighboring cell on the basis of the measurement configuration for the NTN cell; and measuring the NTN neighboring cell.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Non-Terrestrial Network (NTN) based communication is being discussed in NR. The terminal may perform NTN-based communication with artificial satellites, air vehicles, and the like. Meanwhile, conventionally, a method for a terminal to effectively perform NTN-based communication has not been discussed.

In an NTN environment, the service area of a satellite is very large compared to the service area of a base station in a TN environment. A satellite can also use multiple beams to divide its service area into multiple cells and manages the service area. Also, in this case, the service area covered by a single beam is also much larger than the service area of a base station in TN.

For example, in an NTN environment, the difference between the time when the signal from the serving satellite/beam arrives at the terminal and the time when the signal from the neighboring satellite/beam arrives at the terminal is large. As a result, the terminal may not be able to properly measure the signals from the neighboring satellites/beams in the intervals (SMTC or MG) where the terminal needs to measure the signals from the neighboring satellites/beams.

For example, when considering the size of the satellite's service area, it may be inefficient for the terminal to perform measurements of the surrounding beam or satellite, based on the measurement intervals defined by the TN. In addition, such measurements can cause a significant increase in power consumption of the terminal, which can affect system performance such as throughput.

For example, since the service coverage area is also determined by the 3 dB beam width of the satellite, the attenuation of signal strength at the edge of the coverage area is relatively small compared to the TN environment, so it may not be clearly observed that the signal strength of the neighboring satellite/beam is larger.

### DISCLOSURE

### TECHNICAL PROBLEM

Accordingly, a disclosure of the present specification has been made in an effort to solve the aforementioned problem.

### TECHNICAL SOLUTION

In order to solve the above problem, the disclosure of the present specification provides a method for performing communication related to NTN, performed by a UE. The method comprising: receiving a measurement configuration for an NTN cell including a measurement configuration for the NTN serving cell, from an NTN serving cell; transmitting at least one of location information of the UE or propagation delay information, to the NTN serving cell; receiving triggering information from the NTN serving cell that triggers to perform measurement for the NTN serving cell and/or the NTN neighbor cell based on measurement configuration for the NTN cell; and performing measurement for the NTN neighbor cell, based on measurement configuration for the NTN serving cell.

In order to solve the above problems, one disclosure of the present specification provides a UE performing communication related to NTN. The UE includes at least one transceiver; at least one processor; and at least one memory that stores instructions and is operatively electrically connectable with the at least one processor. Operations performed based on the command being executed by the at least one processor may include: receiving a measurement configuration for an NTN cell including a measurement configuration for the NTN serving cell, from an NTN serving cell; transmitting at least one of location information of the UE or propagation delay information, to the NTN serving cell; receiving triggering information from the NTN serving cell that triggers to perform measurement for the NTN serving cell and/or the NTN neighbor cell based on measurement configuration for the NTN cell; and performing measurement for the NTN neighbor cell, based on measurement configuration for the NTN serving cell.

In order to solve the above problems, one disclosure of the present specification provides a device in mobile communication. The device includes at least one processor; and at least one memory that stores instructions and is operably electrically connectable with the at least one processor, wherein the instructions are executed based on execution by the at least one processor. Operations performed based on the command being executed by the at least one processor may include: identifying, from an NTN serving cell, a measurement configuration for an NTN cell comprising a measurement configuration for the NTN serving cell; generating at least one of location information of the at least one processor or propagation delay information; identifying triggering information that triggers to perform a measurement of the NTN serving cell and/or the NTN neighbor cell based on the measurement configuration for the NTN cell; and performing a measurement of the NTN neighbor cell based on the measurement configuration for the NTN serving cell.

In order to solve the above problems, one disclosure of the present specification provides a non-volatile (non-volatile) computer readable storage medium recording instructions. The instructions, when executed by one or more processors, cause the one or more processors to perform operations comprising: identifying, from an NTN serving cell, a measurement configuration for an NTN cell comprising a measurement configuration for the NTN serving cell; generating at least one of location information of the at least one processor or propagation delay information; identifying triggering information that triggers to perform a measurement of the NTN serving cell and/or the NTN neighbor cell based on the measurement configuration for the NTN cell; and performing a measurement of the NTN neighbor cell based on the measurement configuration for the NTN serving cell.

### ADVANTAGEOUS EFFECTS

According to the disclosure of the present specification, it is possible to solve the problems of the related art.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementation of the present disclosure is applied.
FIG. 2 shows an example of a wireless device to which implementation of the present disclosure is applied.
FIG. 3 shows an example of a wireless device to which implementation of the present disclosure is applied.
FIG. 4 shows an example of a radio frame structure of NR to which implementation of the present disclosure is applied.
FIG. 5 shows an example of a slot structure of an NR frame to which implementation of the present disclosure is applied.
FIG. 6 is an exemplary diagram illustrating an example of an SS block in NR.
FIG. 7 an exemplary diagram illustrating an example of beam sweeping in NR.
FIG. 8 illustrate a procedure of measurement and measurement report considering an SS burst.
FIG. 9 shows a first example of an NTN scenario.
FIG. 10 shows a second example of an NTN scenario.
FIG. 11 illustrates a first example of a service area in an NTN communications environment, according to an embodiment of the disclosure of the present specification.
FIG. 12 illustrates a second example of a service area in an NTN communications environment, according to an embodiment of the disclosure of the present specification.
FIG. 13 illustrates a first example of defining an area C, according to an embodiment of the disclosure of the present specification.
FIG. 14 illustrates a second example of defining area C according to an embodiment of the disclosure of the present specification.
FIG. 15 illustrates an example of SSB reception in area C and an area other than area C according to an embodiment of the disclosure of the present specification.
FIG. 16 illustrates a first example of operation of a terminal and operation of an NTN network according to an embodiment of the disclosure of the present specification.
FIG. 17 illustrates a second example of operation of a terminal and operation of an NTN network according to an embodiment of the disclosure of the present specification.
FIG. 18 illustrates a third example of operation of a terminal and operation of an NTN network according to an embodiment of the disclosure of the present specification.
FIG. 19 illustrates a fourth example of operation of a terminal and operation of an NTN network according to an embodiment of the disclosure of the present specification.
FIG. 20 illustrates a fifth example of operation of a terminal and operation of an NTN network according to an embodiment of the disclosure of the present specification.
FIG. 21 illustrates an example of operation of a terminal according to an embodiment of the disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

Although a user equipment (UE) is illustrated by way of example in the accompanying drawings, the illustrated UE may be referred to as a terminal, mobile equipment (ME), and the like. In addition, the UE may be a portable device such as a notebook computer, a mobile phone, a PDA, a smartphone, and a multimedia device or may be a non-portable device such as a PC or a vehicle-mounted device.

Hereinafter, a UE is used as an example of a wireless communication device (or a wireless device or wireless equipment) capable of wireless communication. An operation performed by a UE may be performed by a wireless communication device. A wireless communication device may also be referred to as a wireless device, wireless equipment, or the like. Hereinafter, AMF may mean an AMF node, SMF may mean an SMF node, and UPF may mean a UPF node.

A base station used below generally refers to a fixed station communicating with a wireless device and may also be referred as an evolved-NodeB (eNodeB), an evolved-NodeB (eNB), a base transceiver system (BTS), an access point, and a next generation NodeB (gNB).

### I. Techniques and procedures applicable to present disclosure

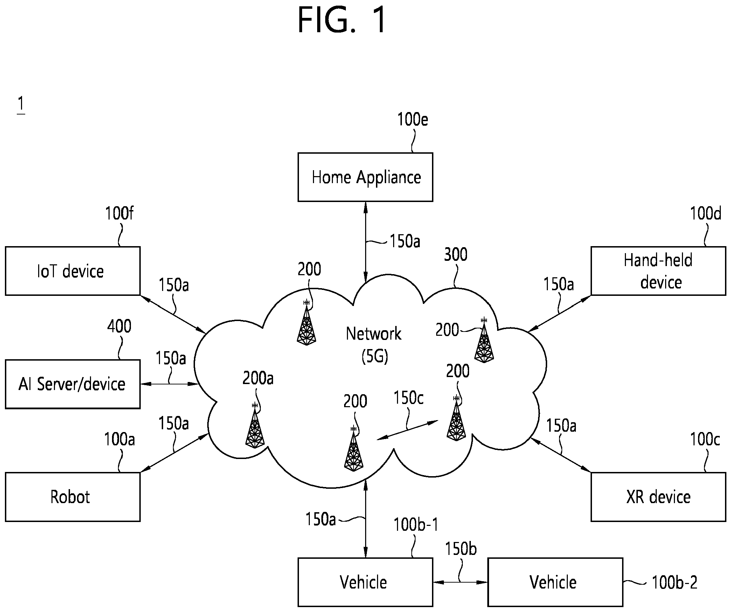

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an Internet of Things (IoT)device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical value of the frequency range of the NR system may be changed. For example, FR1 may include a frequency band of 410 MHz to 7125 MHz as shown in Table 2 below. That is, FR1 may include a frequency band of 6 GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410 MHz - 7125 MHz | 15, 30, 60 kHz |
| FR2 | 24250 MHz - 52600 MHz | 60, 120, 240 kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

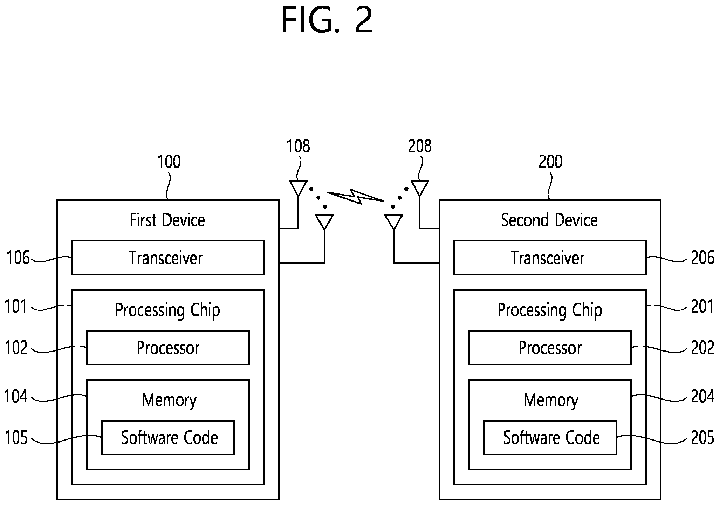

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

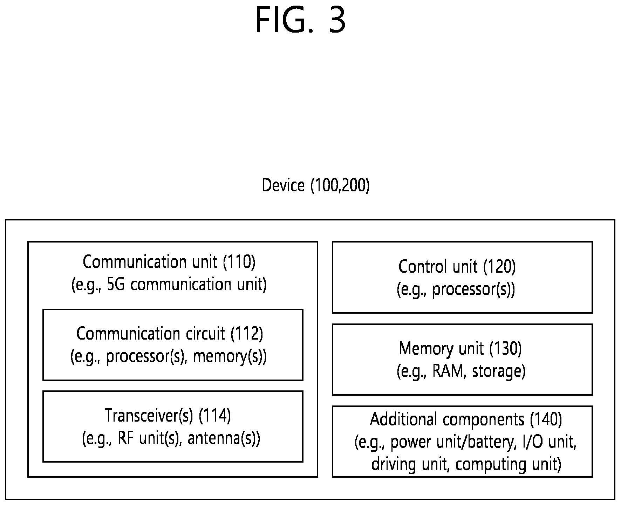

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

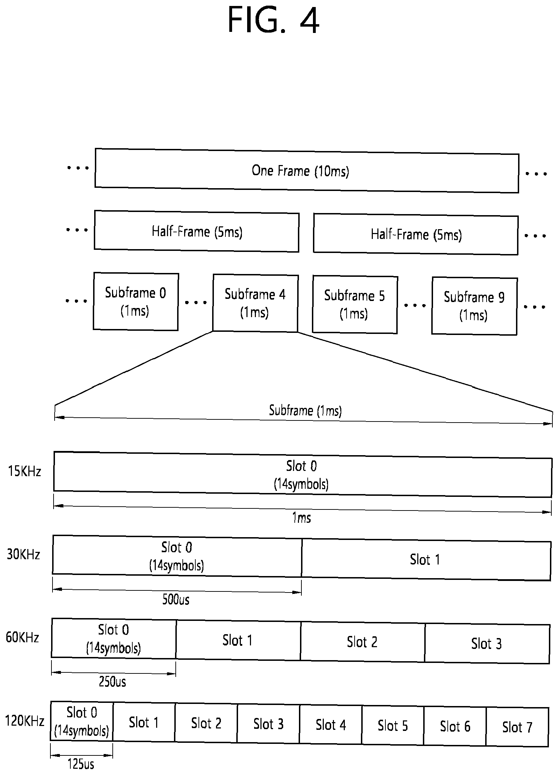

FIG. 4 shows an example of a radio frame structure of NR to which implementation of the present disclosure is applied.

FIG. 4 shows a radio frame structure of NR according to an embodiment of the present disclosure. The embodiment of FIG. 4 may be combined with various embodiments of the present disclosure.

Referring to FIG. 4, a radio frame may be used in uplink and downlink transmission in NR. The radio frame has a length of 10 ms and may be defined as two 5 ms half-frames (HF). A half-frame may include 5 1 ms subframes (SF). A subframe may be divided into one or more slots, and the number of slots in a subframe may be determined according to a subcarrier spacing (SCS). Each slot may include 12 or 14 OFDM(A) symbols according to a cyclic prefix (CP).

When a normal CP is used, each slot may include 14 symbols. When an extended CP is used, each slot may include 12 symbols. Here, the symbol may include an OFDM symbol (or a CP-OFDM symbol), a single carrier-FDMA (SC-FDMA) symbol (or a discrete Fourier transform-spread-OFDM (DFT-s-OFDM) symbol).

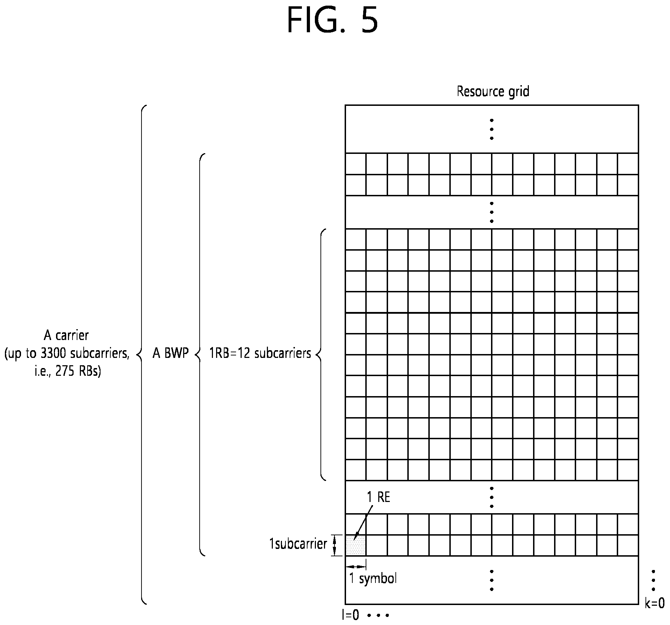

FIG. 5 shows an example of a slot structure of an NR frame to which implementation of the present disclosure is applied.

FIG. 5 shows a slot structure of an NR frame according to an embodiment of the present disclosure. The embodiment of FIG. 5 may be combined with various embodiments of the present disclosure.

Referring to FIG. 5, a slot includes a plurality of symbols in the time domain. For example, one slot may include 14 symbols in the case of the normal CP, whereas one slot may include 12 symbols in the case of an extended CP. Alternatively, one slot may include 7 symbols in the case of a normal CP, whereas one slot may include 6 symbols in the case of an extended CP.

A carrier includes a plurality of subcarriers in the frequency domain. A resource block (RB) may be defined as a plurality of (e.g., 12) consecutive subcarriers in the frequency domain. A bandwidth part (BWP) may be defined as a plurality of consecutive (physical) resource blocks ((P)RB) in the frequency domain and may correspond to one numerology (e.g., SCS, CP length, etc.). A carrier may include a maximum of N (e.g., 5) BWPs. Data communication may be performed through an activated BWP. Each element may be referred to as a resource element (RE) in a resource grid, and one complex symbol may be mapped thereto.

A radio interface between UEs or a radio interface between a UE and a network may be configured as an L1 layer, an L2 layer, and an L3 layer. In various embodiments of the present disclosure, the L1 layer may mean a physical layer. For example, the L2 layer may mean at least one of a MAC layer, an RLC layer, a PDCP layer, and an SDAP layer. For example, the L3 layer may mean an RRC layer.

### <SS block in NR>

An SS block (Synchronization Signal Block: SSB) includes information necessary for a terminal to perform initial access in 5G NR, i.e., a Physical Broadcast Channel (PBCH) including a Master Information Block (MIB) and a Synchronization Signal (SS) (including PSS and SSS). SS block may mean SS / PBCH block.

In addition, a plurality of SSBs may be grouped to define an SS burst, and a plurality of SS bursts may be grouped to define an SS burst set. It is assumed that each SSB is beamformed in a specific direction, and several SSBs in an SS burst set are designed to support terminals in different directions.

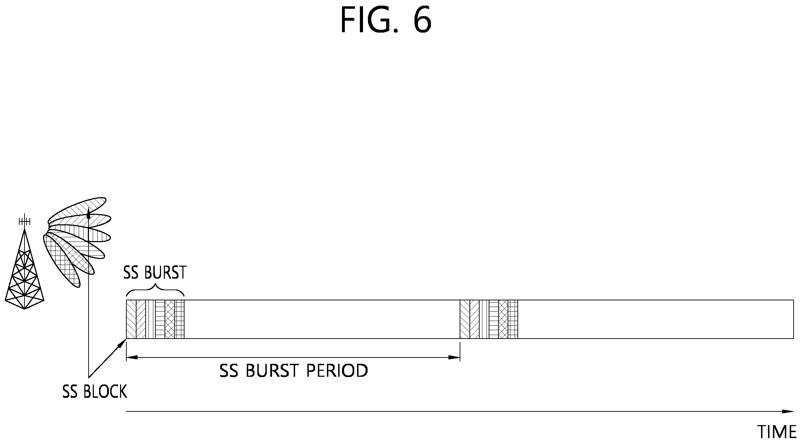

FIG. 6 is an exemplary diagram illustrating an example of an SS block in NR.

Referring to FIG. 6, an SS burst is transmitted in every predetermined periodicity. Accordingly, a UE receives SS blocks, and performs cell detection and measurement.

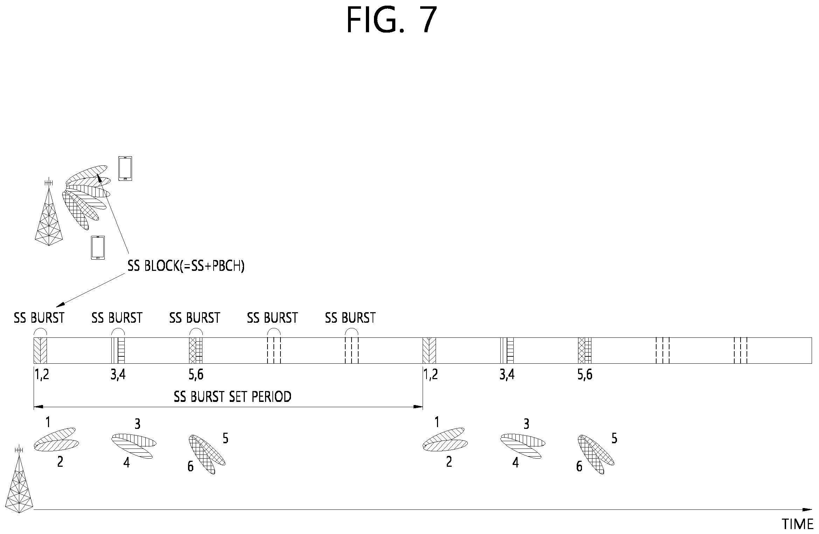

Meanwhile, in the 5G NR, beam sweeping is performed on an SS. A detailed description thereof will be provided with reference to FIG. 7.

FIG. 7 is an exemplary diagram illustrating an example of beam sweeping in the NR.

A base station transmits each SS block in an SS burst over time while performing beam sweeping. In this case, multiple SS blocks in an SS burst set are transmitted to support UEs existing in different directions. In FIG. 7, the SS burst set includes one to six SS blocks, and each SS burst includes two SS blocks.

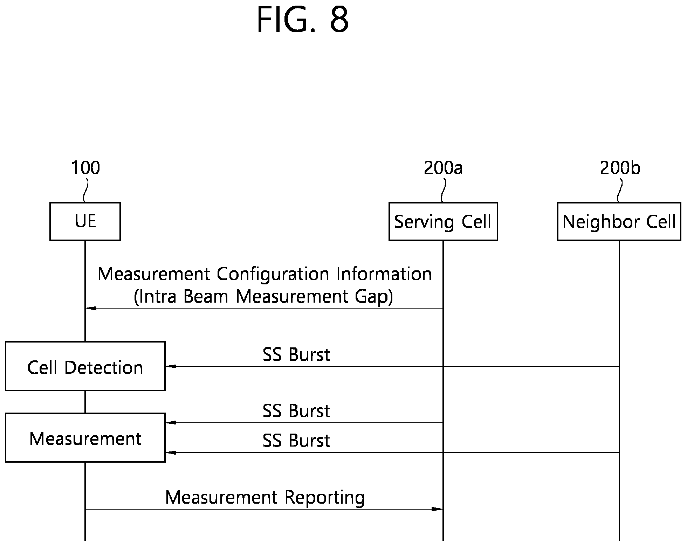

FIG. 8 illustrates measurement and a measurement report procedure considering an SS burst.

As can be seen with reference to FIG. 8, a UE may receive measurement configuration information from a serving cell. The measurement configuration information may include information on a first measurement gap, e.g., an intra beam measurement gap. In addition, the measurement configuration information may include information on a second measurement gap, e.g., an intra RSRP measurement gap.

The UE may receive an SS burst from one or more neighbor cells to perform cell detection.

In addition, the UE may perform measurement based on the SS burst received from the one or more neighbor cells during a first measurement gap (e.g., an intra beam measurement gap) indicated by the information.

In addition, although not shown, the UE may perform RSRP measurement based on a reference signal (RS) from the one or more neighbor cells during the second measurement gap.

In addition, the UE may perform measurement reporting.

### < Non-Terrestrial Network (NTN)>

In the following, an example overview of a non-terrestrial network (NTN) is described.

NTN may indicate a network or network segment using Radio Frequency (RF) resources mounted on a satellite (or an Unmanned Aerial System (UAS) platform).

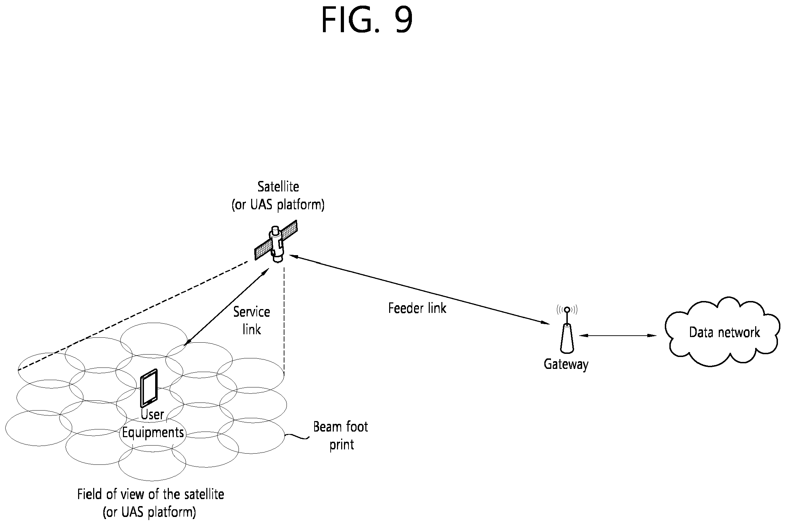

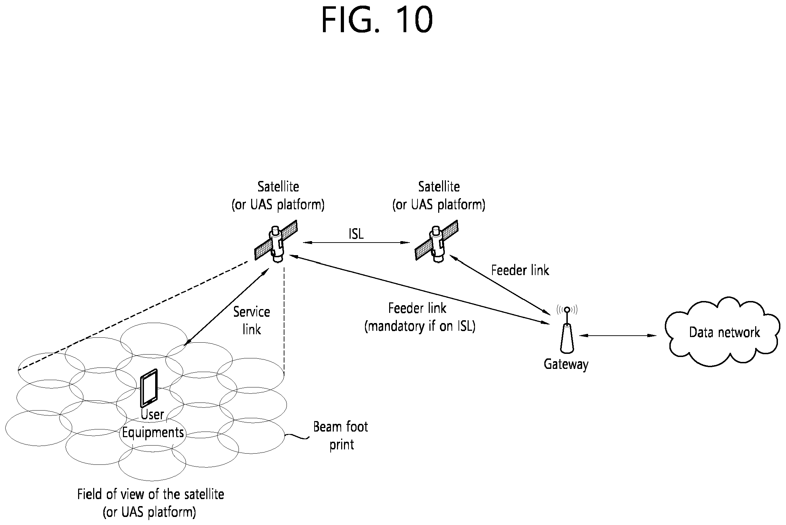

A typical scenario of the NTN providing access to the UE is as illustrated in FIG. 9 or FIG. 10 below.

The following drawings are made to explain a specific example of the present specification. Since the names of specific devices or names of specific signals/messages/fields described in the drawings are provided as examples, the technical features of the present specification are not limited to the specific names used in the drawings below.

FIG. 9 shows a first example of an NTN scenario.

The example of FIG. 9 shows an example of an NTN typical scenario based on a transparent payload.

Referring to the example of FIG. 9 , a satellite (or UAS platform) may generate a service link with a UE. A satellite (or UAS platform) can be connected to the gateway through a feeder link. Satellites can be connected to data networks through gateways. The beam footprint may mean an area in which a signal transmitted by a satellite can be received.

The following drawings are made to explain a specific example of the present specification. Since the names of specific devices or names of specific signals/messages/fields described in the drawings are provided as examples, the technical features of the present specification are not limited to the specific names used in the drawings below.

FIG. 10 shows a second example of an NTN scenario.

The example of FIG. 10 shows an example of an NTN typical scenario based on a regenerative payload.

Referring to the example of FIG. 10 , a satellite (or UAS platform) may create a service link with a UE. A satellite (or UAS platform) connected to the UE can be connected to another satellite (or UAS platform) through Inter-satellite links (ISL). Other satellites (or UAS platforms) can be connected to the gateway via feeder links. A satellite can connect to a data network through a gateway with other satellites, based on the regenerated payload. If there is no ISL between a satellite and another satellite, a feeder link between the satellite and the gateway is required.

For reference, the above examples of FIG. 9 and FIG. 10 are merely examples of NTN scenarios, and NTN can be implemented based on various types of scenarios.

NTN can generally be characterized by the following elements:
- One or several sat-gateways (satellite gateways) connecting NTN to the public data network:
   i) Geostationary Earth Orbit (GEO) satellites may be fed by one or several satellite gateways deployed over satellite coverage (e.g., areaal or even continental coverage). It can be assumed that a UE in a cell is served by only one sat-gateway.
   ii) Non-GEO satellites may be continuously served by one or several satellite gateways at a time. The system can guarantee service and feeder link continuity between successive service satellite gateways with a time duration sufficient to proceed with mobility anchoring and handover.
- Feeder link or radio link between sat-gateway and satellite (or UAS platform).
- Service link or radio link between UE and satellite (or UAS platform).
- Satellites (or UAS platforms) capable of implementing transparent or regenerative (with on board processing) payloads. A satellite (or UAS platform) may generally generate multiple beams over a designated service area depending on the field of view of the satellite (or UAS platform). The footprints of the beam may be generally elliptical. The field of view of a satellite (or UAS platform) may vary depending on the onboard antenna diagram and minimum elevation angle:
   i) Transparent payload: may include radio frequency filtering, frequency conversion and amplification. Thus, the waveform signal repeated by the payload may not change;
   ii) regenerative payload: may include radio frequency filtering, frequency conversion and amplification, demodulation/decoding, switching and/or routing, and coding/modulation. The regenerative payload may be substantially equivalent to loading all or part of the base station functionality (e.g., gNB) on a satellite (or UAS platform).
- For constellation of satellites, may optionally include inter-satellite link (ISL). This may require a playback payload on the satellite. ISLs can operate at RF frequencies or wide bands.
- The UE may be served by a satellite (or UAS platform) within the targeted service area.

Table 3 below shows a list of various types of satellites (or UAS platforms).

**[Table 3]**

| Platform | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including high altitude pseudo satellite (HAPS)) | 8 - 50 km (20 km for HAPS) | | 5 - 200 km |
| High Elliptical Orbit (HEO) satellite | 400 - 50000 km | Elliptical around the earth | 200 - 3500 km |

The examples in Table 3 show examples of the types of NTN platforms.

In general, GEO satellites and UAS may be used to provide continental, areaal or local services. The constellation of LEO satellites and the constellation of MEO satellites can be used to provide services in both the northern and southern hemispheres. In some cases, the deployment of such satellites may provide global coverage including the polar areas. For global coverage, this may require proper orbit inclination, sufficient beams generated and ISLs.

### II. Disclosures of the present specification

The disclosures of the present specification may be implemented in one or more combinations (e.g., combinations that include at least one of those described below). While each of the drawings illustrates an embodiment of each disclosure, the embodiments of the drawings may be implemented in combination with each other.

The disclosures herein may comprise any combination of one or more of the actions/compositions/steps described below. The following methods described below may be performed or used combinatorially or complementarily.

Non-Terrestrial Network (NTN) based communication is being discussed in NR. The terminal may perform NTN-based communication with artificial satellites, air vehicles, and the like. Meanwhile, conventionally, a method for a terminal to effectively perform NTN-based communication has not been discussed.

5G NR NTN is introduced to provide communication services using satellites/aircraft in the coverage holes of the existing terrestrial network (TN). In this context, a coverage hole can be defined as an area that is not covered by the signal of a TN base station. For example, the satellite/aircraft can be a transparent satellite/aircraft that performs simple signal amplification like a repeater in an existing TN, or a regenerative satellite/aircraft that can perform the role of a ground base station.

It should be noted that various examples of the disclosure assume and describe a satellite, particularly a transparent satellite, as an example of a network in NTN communications. However, this is by way of example only, and in the various disclosed examples of the disclosure of the present specification, the description of a satellite or transparent satellite may also be applied to a regenerative satellite or air vehicle.

Terminals may receive services (e.g., services based on NTN communications) from the NTN. These terminals may need to measure neighboring satellites or neighboring beams as the satellite moves or the terminal moves. In conventional TN environments, it is clearly observed that the signal strength decreases with distance from the base station and increases with proximity to the base station. In addition, the distance between base stations is close, on the order of 200 meters to 500 meters in urban environments, so it is easy for terminals to receive services by periodically detecting signals of base station and switching serving cells to a base station with stronger signal strength.

However, the service area of a satellite in an NTN environment is much larger than the service area of a base station in a TN environment. Even if a satellite uses multiple beams to divide its service area into multiple cells, the service area covered by a single beam is much larger than the service area of a base station in TN.

In other words, in an NTN environment, there is a large difference between the time when the signal from the serving satellite/beam arrives at the terminal and the time when the signal from the neighboring satellite/beam arrives at the terminal. As a result, there may be a problem that the terminal does not properly measure the signal of the neighboring satellite/beam in the interval (Synchronization Signal (SS) / Physical Broadcast Channel (PBCH) Block Measurement Time Configuration (SMTC) or Measurement Gap (MG)) where the terminal should measure the signal of the neighboring satellite/beam.

Also, based on the measurement intervals defined in the TN, it may be inefficient for the terminal to perform measurements of the neighboring beam or satellite, given the size of the satellite's service area. In addition, such measurements can cause a significant increase in power consumption of the terminal, which can affect system performance such as throughput.

For example, in NTN communication, nodes that act as base stations (or relays) for cells can be satellites and air vehicles. For example, in NTN communication, HAPS (airplane 20 kilometers), LEO (low earth orbit satellite; 600 kilometers to 1200 kilometers), GEO (geostationary satellite; 36000 kilometers), etc. may be considered.

Therefore, the NTN terminal may need to measure the satellite/aircraft for serving cell measurements and neighbor cell measurements. In order for the NTN terminal to perform the measurements, the SMTC/MG may need to be configured for the terminal.

In conventional TN, the propagation delay difference between cells is not large. Because of this, it was possible for a UE to measure multiple cells within a single SMTC/MG. Therefore, in conventional TN communications, many SMTCs were not required to measure neighboring cells.

However, in NTN, since cells exist at different altitudes, it is less likely that within a time interval based on one SMTC/MG, there will be signals transmitted by multiple cells. Also, even if two satellites exist at the same altitude, they may have different propagation delays to the UE due to different elevation angles. Therefore, according to conventional TN communication, more SMTC/MG is required, and since SMTC/MG is a measurement interval, it can affect the data rate, battery consumption, etc. of the terminal.

In addition, since the service area is also determined by the 3 dB beam width of the satellite, the attenuation of the signal strength at the edge of the service area is relatively small compared to the TN environment, so the phenomenon that the signal strength of the neighboring satellite/beam is larger may not be clearly observed. Here, a satellite's 3 dB beam width may be an example of defining a satellite's service area. For example, if a satellite shoots a beam towards the Earth, the main lobe of the beam, the side lobe of the beam, etc. can reach the Earth. The center of the main lobe, where the beam strength is strongest, is the service area center, and the satellite's service area can be defined as the area from the center of the service area to where the beam strength is weakened by 3 dB.

In the following, various examples of the disclosure of the present specification will be described to support efficient NTN communications. The various examples of the disclosure of the present specification describe various examples of specifications and terminal and network operations required for measuring satellite signals and/or air vehicle signals in NTN communications in a 5G NR network. For example, when a terminal needs to measure signals from nearby satellites/beams, a method for setting MG/SMTC is proposed for triggering the measurement time and preventing performance degradation by setting a specific area using the position/delay information of the terminal.

For example, various examples of the disclosure of the present specification propose device operations and/or network operations that may be utilized to avoid reducing system performance, to trigger measurement timing, and/or to conserve device power, when a device needs to measure signals from neighboring satellites/beams.

As mentioned earlier, in NTN, satellites can serve a significantly larger area compared to the base station in TN. The satellite can serve the entire area with a single beam, or it can divide the service area into multiple beams. If the satellite serves the entire area using a single beam, the entire area can be viewed as a single cell. Also, if the satellite serves the entire area using multiple beams (e.g., multiple beams), each beam can be viewed as a cell, and each of the multiple beams can have a separate cell IDs.

The various examples of the disclosure of the present specification assume and describe an area covered by a single beam as a single cell for convenience, but this is for illustrative purposes only. In other words, what is described herein with respect to a cell may be equally applicable to measuring signals for multiple beams with a single cell ID, i.e., what is described in the various disclosed examples of the disclosure of the present specification is valid when the UE is being served by a single beam from a satellite, and the UE is measuring the strength of beams covering neighboring areas. Further, the teachings of the various disclosed examples are also valid when the UE is receiving service from a single satellite, and the UE is measuring signals from neighboring satellites. Further, the disclosure of various examples of the disclosure of the present specification is also applicable when the cell IDs that the UE needs to measure change due to the switching of the feeder link during beam measurement.

In addition, while various examples of the disclosure of the present specification describe SSB-based measurements as an example, this is by way of illustration only, and various examples of the disclosure of the present specification may be equally applicable to measurements based on other reference signals (e.g., CSI-RS).

Note that in operations related to 5G NR NTN communication, the location information of the terminal using GNSS and the orbit information of the satellite may be utilized.

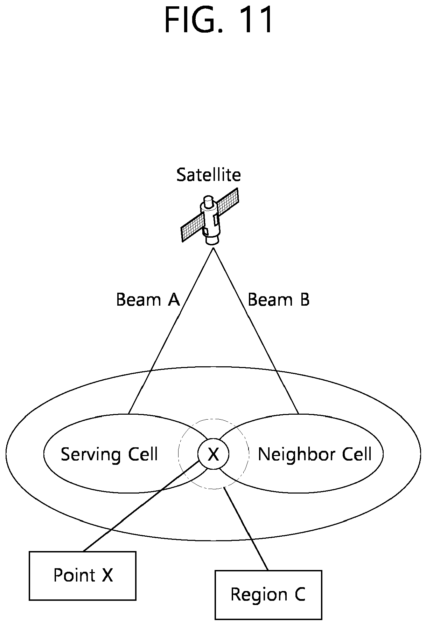

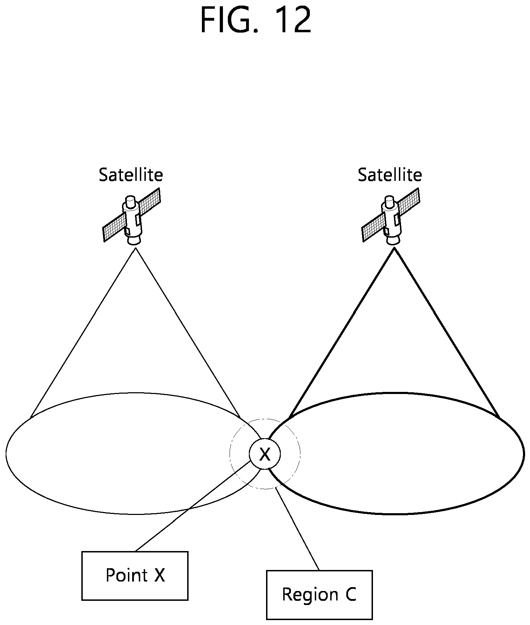

FIGS. 11 and 12 show examples of service areas in an NTN communication environment.

The following drawings are intended to illustrate specific embodiments of the disclosure of the present specification. The designations of specific devices or the designations of specific signals/messages/fields shown in the drawings are for illustrative purposes only, and the technical features of this specification are not limited to the specific designations used in the drawings below.

**FIG. 11** **illustrates a first example of a service area in an NTN communications environment, according to an embodiment of the disclosure of the present specification.**

Referring to the example of FIG. 11, a satellite may use a plurality of beams (e.g., beam A and beam B) to provide service. For example, it is assumed that the service area based on beam A is a serving cell, and the service area based on beam B is a neighboring cell.

Here, point X may be the boundary of a serving cell and a neighboring cell. For example, point X may be a point where the distance to the serving cell is the same as the distance to the neighboring cell.

The following drawings are intended to illustrate specific embodiments of the disclosure of the present specification. The designations of specific devices or the designations of specific signals/messages/fields shown in the drawings are for illustrative purposes only, and the technical features of this specification are not limited to the specific designations used in the drawings below.

**FIG. 12** **illustrates a second example of a service area in an NTN communications environment, according to an embodiment of the disclosure of the present specification.**

Referring to the example of FIG. 12, two satellites may provide services in their respective service areas. For example, assume that the service area based on the left satellite (e.g., the serving satellite) is the serving service area, and the service area based on the right satellite (e.g., the neighbor satellite) is the neighbor service area.

Here, point X may be the boundary point between the serving service area and the neighboring service area. For example, point X may be a point where the distance to the serving satellite is the same as the distance to the neighboring satellite.

As illustrated in the examples of FIGS. 11 and 12, in an NTN environment, there may exist a point X (or line X) where the serving cell and the neighboring cell are at the same distance from the beam, or the serving satellite and the neighboring satellite are at the same distance.

In the example of FIG. 11, if the beams are synchronized (e.g., if beam A and beam B are synchronized with each other), then at point X, the signal from beam A and the signal from beam B can arrive at the same time.

Similarly, in the example of FIG. 12, if the left and right satellites are synchronized with each other, then at point X, the signals from both satellites may arrive simultaneously.

That is, at point X, it may be possible for the UE to perform the SSB measurement of beam B or the right satellite by applying an existing SS/PBCH Block Measurement Time Configuration (SMTC). For example, the SMTC may include information related to the SMTC window (or interval) for the UE to measure SSB, information related to the length of the SMTC window (or interval), information about the offset of the start of the window (or interval), and the like. For example, at point X, the SMTC used in the SSB measurement for beam A, or the SMTC used in the SSB measurement for the left satellite, may be used in the SSB measurement for beam B, or the SSB measurement for the right satellite.

If the length of the cyclic prefix (CP) or the size of the SMTC window is taken into account, it may be possible for the UE to utilize a single SMTC window to perform SSB measurements for beam B or the right satellite in a specific area C (the dashed area in the example of FIG. 11 and the example of FIG. 12), rather than at a specific point X. In this case, the single SMTC window may be the one used to perform SSB measurements for beam A or the right satellite. Here, one SMTC window may refer to the SMTC window used by the UE for SSB measurements for beam A or for SSB measurements for the left satellite. This is because, when taking into account the CP length or the size of the SMTC window, the SMTC used in the SSB measurement for beam A or the SMTC used in the SSB measurement for the left satellite may be used for the SSB measurement for beam B or the SSB measurement for the right satellite, even in an area larger than the location where the signal of beam A and the signal of beam B arrive simultaneously or the location where the signal of the left satellite and the signal of the right satellite arrive simultaneously.

Here, the size of a particular area C (or area C) may vary depending on CP length, satellite altitude, beam angle, and/or timing error tolerance. Additionally, an NTN network (e.g., an NTN satellite) may configure the area (or area) C. The NTN satellite may be, for example, a regenerative satellite, a transparent satellite, a gateway, and a gNB. In configuring area (or area) C, the NTN network may utilize one or both of the location information reported by the terminal to the NTN network or the delay information from each satellite/beam reported by the terminal to the NTN network.

Area C may refer to an area where the UE can perform measurements, by using one SMTC, for both the serving satellite/beam and the neighboring satellite/beam. Here, neighboring satellites/beams may mean neighboring satellites/beams that have a similar delay difference to the serving satellite/beam. In other words, area C may mean an area in which a UE may use one SMTC to perform measurements for a serving satellite/beam and a neighboring satellite/beam having a similar delay difference. Hereinafter, area C may also be referred to as an SMTC area (SR) or boundary area. For example, area C may refer to an area where the UE's distance from neighboring cells is equal to or smaller than a certain distance.

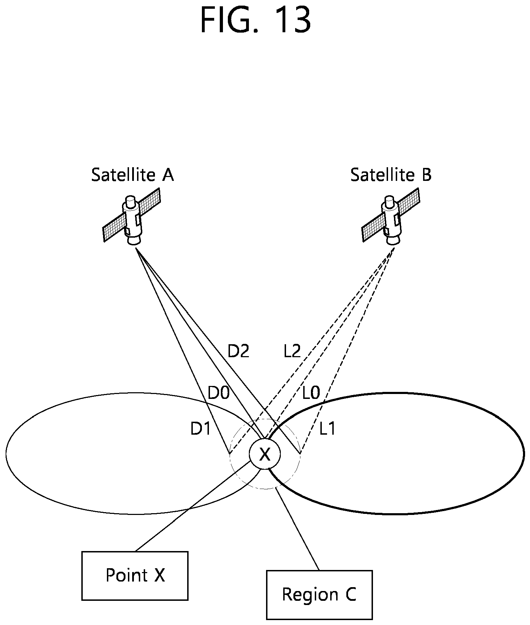

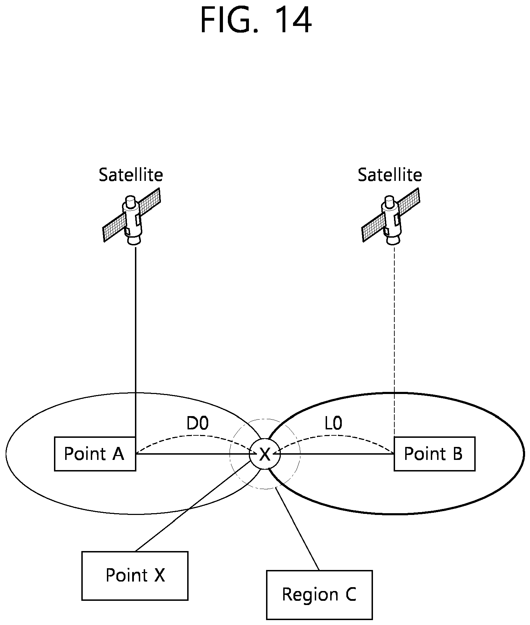

FIGS. 13 and 14 below are examples of defining area C.

The following drawings are intended to illustrate specific embodiments of the disclosure of the present specification. The designations of specific devices or the designations of specific signals/messages/fields shown in the drawings are for illustrative purposes only, and the technical features of this specification are not limited to the specific designations used in the drawings below.

FIG. 13 illustrates a first example of defining an area C, according to an embodiment of the disclosure of the present specification.

The example in FIG. 13 is a first example of deriving area C.

For example, as shown in the example of FIG. 13, for two satellites (satellite A and satellite B) with the same altitude, a point X and a specific area C may be defined as follows. In the example of FIG. 12, it is assumed that D0 be the distance of satellite A from point X and L0 be the distance of satellite B from point X. Then, at point X, D0 = L0, and signals from both satellites can arrive simultaneously at point X.

It can be assumed that the terminal can receive signals with a delay difference of T over the receive timing (e.g., slot timing) (e.g., if the signals arrive within 2.345 us, CP/2 of the 15 kHz subcarrier spacing). Note that T can be a time value representing the delay difference in reception timing that the terminal can support. Here, delay difference can mean the difference in time due to delay. For example, the terminal may receive a signal that is T times away from the receive timing. In this case, the terminal can receive the delay difference caused by the distance of T*c (the speed of light) at the same reception timing.

For example, an NTN network can configure area C by determining D1, D2, such that D1 = D0 - T*c, D2= D0 + T*c. In the same way, L1, L2 can be derived to configure area C. For example, an NTN network can configure area C by finding D1, D2 as L1 = L0 - T*c, L2= L0 + T*c.

In other words, area C may be an area where the terminal can receive signals transmitted from satellite A and signals transmitted from satellite B based on a single timing.

The following drawings are intended to illustrate specific embodiments of the disclosure of the present specification. The designations of specific devices or the designations of specific signals/messages/fields shown in the drawings are for illustrative purposes only, and the technical features of this specification are not limited to the specific designations used in the drawings below.

**FIG. 14** **illustrates a second example of defining area C according to an embodiment of the disclosure of the present specification.**

The example in FIG. 14 is a second example of deriving area C.

Also, for example, as shown in the example of FIG. 14, an area C may be configured based on using a distance D0 between X and a point A (e.g., the center of the service area of satellite A) in the service area of satellite A and a distance L0 between X and a point B (e.g., the center of the service area of satellite B) in the service area of satellite B. The area C may also be constructed using a distance L0 of X from a point B (e.g., the center of the service area of satellite B).

If satellites A and B are at the same altitude, then at the point where D0 = L0 (i.e., Point X), the signals from the two satellites have a delay difference of zero. Similar to the example with reference to FIG. 13, assuming that the point at which D0 = L0 is the reference timing, a point that is D0-K (where K is a distance value that takes into account the delay difference that the UE can receive at one timing, similar to the T*c value in the example of FIG. 13) away from A (e.g., this point is equivalent to a point that is L0+K away from B) may be the distance that the UE can receive the signal at one reference timing.

In other words, the area in which the terminal can receive the signal transmitted by satellite A and the signal transmitted by satellite B based on using one timing may be derived by using a specific point within the service area of the satellite.

As previously described with reference to the examples of FIGS. 13 and 14, the NTN network may configure point X and/or area C. For example, the UE may transmit location information and/or delay information to the NTN network. Then, the NTN network may determine point X and/or area C based on the location information and/or delay information. The NTN network may then determine whether the UE is located within area C.

If the UE measures the signal from a serving beam/satellite that does not overlap with area C (i.e., the measurement is made without setting a zone), the reference signal may not arrive within the desired SMTC window due to the delay caused by the difference in distance to the neighboring beam/satellite. For example, if the UE is located outside of zone C, and if the UE performs a measurement for a neighboring beam/satellite based on one SMTC window, the signal from the neighboring beam/satellite may not be received within one SMTC window due to the delay caused by the difference between the distance from the UE to the serving beam/satellite and the distance from the UE to the neighboring beam/satellite. As a result, the NTN network may need to increase whole or a part of SMTC windows. Increasing the length of SMTC window may degrade the performance of the system. This is because as the length of SMTC window increases, the time available for the UE to perform non-measurement communications decreases.

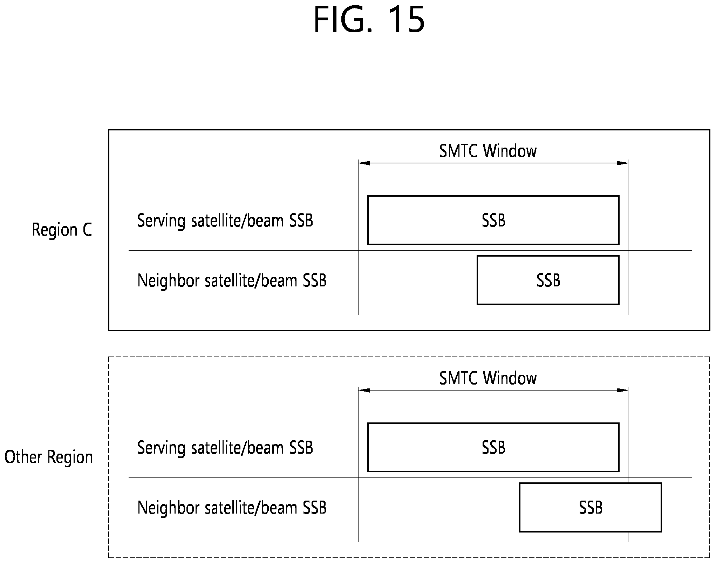

The difference between the example where the UE receives SSB in area C and the example where the UE receives SSB in other areas (other than area C) can be represented as shown in FIG. 15 below.

The following drawings are intended to illustrate specific embodiments of the disclosure of the present specification. The designations of specific devices or the designations of specific signals/messages/fields shown in the drawings are for illustrative purposes only, and the technical features of this specification are not limited to the specific designations used in the drawings below.

**FIG. 15** **illustrates an example of SSB reception in area C and an area other than area C according to an embodiment of the disclosure of the present specification.**

Referring to the example of FIG. 15, if the UE is located within area C, SSB from a neighboring satellite/beam and SSB from a serving satellite/beam may be received within one SMTC window. In this case, the UE may use the one SMTC window to perform measurements for the neighboring satellite/beam and measurements for the SSB and the serving satellite/beam.

If the UE is located in a different area (e.g., an area other than Area C), the SSB from the neighboring satellite/beam and the SSB from the serving satellite/beam may not be received within one SMTC window. In this case, the UE may not be able to perform measurements for the neighboring satellite/beam and measurements for the SSB and the serving satellite/beam using one SMTC window. Therefore, in such cases, the NTN network may need to increase the length of the SMTC window.

In the previous example, Area C was described for synchronized satellites or synchronized beams. Note that Area C can also be utilized for non-synchronized satellites/beams. For example, if the NTN network calculates the propagation delay between a serving satellite/beam and a neighboring satellite/beam, and calculates the degree of misalignment (e.g., difference in synchronization) between the synchronization of the serving satellite/beam and the synchronization of the satellite/beam to be measured, point X and area C for an unsynchronized satellite/beam may be calculated. For example, based on the calculated propagation delay and the degree of misalignment, the NTN network can calculate a specific point X where the signals of the serving satellite/beam and the neighboring satellite/beam arrive simultaneously, and calculate a specific area C.

The previously described area C may be referred to as an SR (e.g., SMTC area) for convenience. For example, an SR may refer to an area where a UE can use one SMTC to perform measurements for both a serving satellite/beam and a neighboring satellite/beam.

Below, embodiments in which Area C (e.g., SR) is utilized are described with reference to various examples.

In the following, a first example of the disclosure of the present specification describes an example of triggering when a UE takes a measurement. A second example of the disclosure of the present specification describes an example for ensuring system performance. A third example of the disclosure of the present specification describes specific examples of behavior of the UE and/or NTN network as described in various examples of the disclosure.

### 1. A first example of the disclosure of the present specification

The first example of the disclosure of the present specification describes, with reference to various examples, an example of triggering when a UE takes a measurement, i.e., an example of measurement time triggering.

Since the service area of the satellite is very large, it may cause the terminal to continuously measure the signals of the neighboring beams/satellites, which may increase the power consumption of the terminal. Therefore, it may be advantageous in terms of power consumption for the terminal to measure the neighboring beams/satellites when the terminal needs to perform handover or reselection to the neighboring beams/satellites, i.e., when the terminal is near an edge such as an SR (e.g., the boundary of a cell or the boundary of a service area).

The serving NTN network (e.g., serving beam/satellite) can determine that the terminal is located within the SR. In this case, the serving NTN network (e.g., serving beam/satellite) may signal to the terminal via a message (e.g., a message such as *deriveSSB-IndexFromCell*) that the neighbor beam is measurable. Here, *deriveSSB-IndexFromCell* may be a message indicating that the serving cell's timing allows it to know the index of the SSB transmitted by the neighboring cell. Alternatively, the serving NTN network (e.g., serving beam/satellite) may separately signal to the terminal the information of the beam/satellite to be measured.

For example, by sending the information in Table 4 below to the terminal, the serving NTN network (e.g., serving beam/satellite) may inform the terminal of the beam/satellite that needs to be measured.

**[Table 4]**

| |
|---|
| ```
 Measurementforsatellite/HAPS
 {
   White_list_satellite/HAPS information.
 }
``` |

For example, the White_list satellite/HAPS information may include information about the satellites and/or HAPS for which the terminal can make measurements based on one SMTC configuration. Here, HAPS may refer to High Altitude Platforms (HAPs). White_list_satellite/HAPS information may include information of satellites and/or HAPS in the form of a white list, i.e., the serving NTN network (e.g., serving beam/satellite) may transmit White_list_satellite/HAPS information to the terminal to allow the terminal to prioritize measurements for satellites that do not require multiple SMTC configurations due to a small delay difference with the serving satellite.

The device may also determine when to start the measurement. For example, the device may initiate a measurement when it determines that it is within the SR that was communicated to it. In another example, the network may determine the location of the device and, if it determines that the device is within the SR, may instruct the device to take a measurement.

### 2. A second example of the disclosure of the present specification

The second example of the disclosure of the present specification describes an example for ensuring system performance, with reference to various examples. The second example of the disclosure of the present specification describes an example of a system performance guarantee section.

Even if a satellite has a very large service area, depending on the speed of the satellite/terminal, it may be necessary for the terminal to measure signals from neighboring beams/satellites even when the terminal is not located at the edge of the satellite/beam (e.g., SR). In this case, the performance degradation from the serving beam/satellite may occur due to the need to increase the SMTC window or set up MG. For example, the serving NTN network (e.g., the serving beam/satellite) may need to increase the SMTC window or configure the MG, which may cause performance degradation in the communication service between the terminal and the serving beam/satellite. Note that in the present specification, "serving beam/satellite" may refer to a serving beam, serving cell, serving satellite, etc. However, for terminals that exist within the SR, performance degradation can be avoided by not configuring the SMTC window increase/shift and MG. For example, a serving NTN network (e.g., serving beam/satellite) can avoid performance degradation by not setting SMTC interval increase/shift and MG for terminals located within the SR.

### 3. A third example of the disclosure of the present specification

The third example of the disclosure of the present specification describes, with reference to various examples, specific examples of the operation of a UE and/or NTN network (e.g., serving beam/satellite) as described in the various examples of the disclosure.

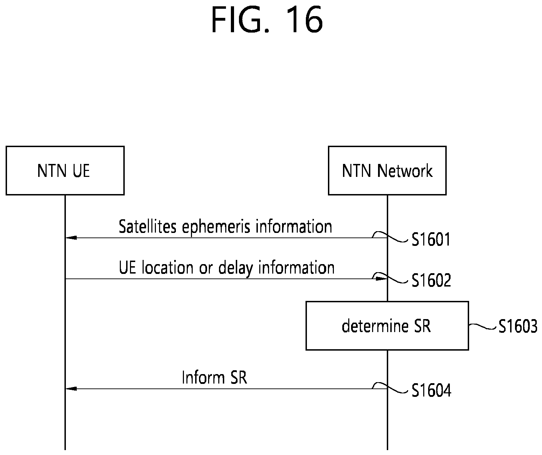

FIGS. 16 to 20 are flow charts illustrating procedures according to various examples of the disclosure of the present specification.

The example in FIG. 16 is an illustration of the procedure by which an NTN network determines the Area C (or boundary area or SR).

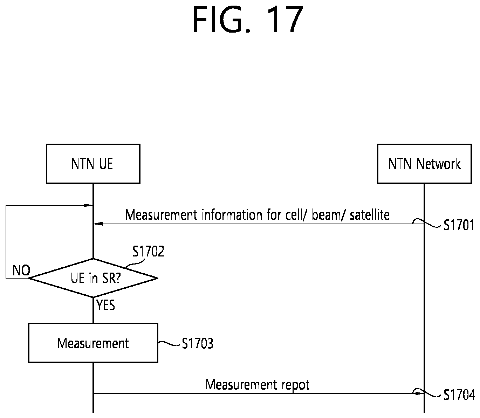

The examples of FIG. 17 to FIG. 20 are various examples of UEs and/or NTN networks utilizing Area C (or a demarcation area or SR) to perform procedures related to measurements.

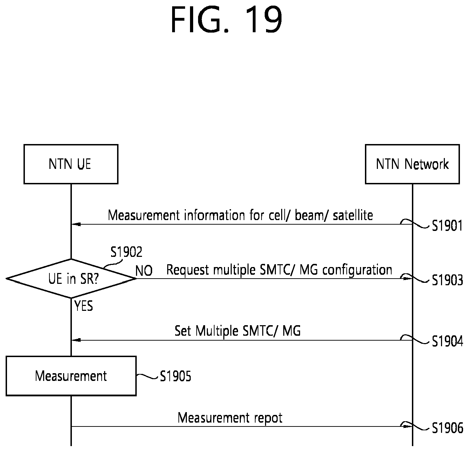

Note that the example of FIG. 17 and the example of FIG. 19 may be examples of cases where the UE triggers the measurement by directly determining that the UE is in the SR. These examples may be applicable when the terminal is in RRC idle/inactive mode, for example.

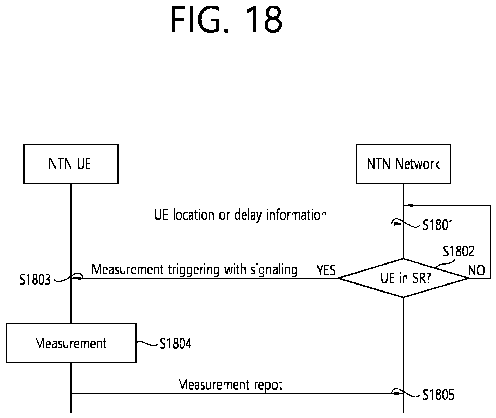

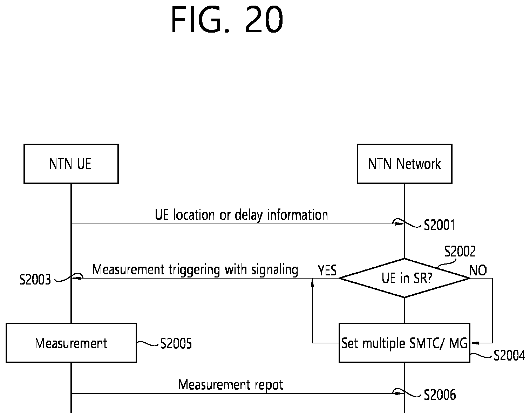

Of note, the example of FIG. 18 and the example of FIG. 20 may be examples of when a measurement is triggered by network signaling. These examples may be applicable when, for example, the terminal is in RRC connected mode.

For reference, the example of FIG. 17 and the example of FIG. 18 are examples where the measurement itself is limited when it is determined that the position of the terminal is not located at an SR or an edge, and the example of FIG. 19 and the example of FIG. 20 are examples where the measurement is not limited when it is determined that the position of the terminal is not located at an SR or an edge, and multiple SMTC/MG or an increased SMTC window is required.

Referring to FIGS. 16 and 20 below, the NTN network may be, for example, a serving satellite or a serving cell. For example, the NTN network may be a regenerative satellite or a transparent satellite. If the NTN network is a transparent satellite, the operations performed by the NTN network may be performed by the transparent satellite, the gateway, and the gNB.

The following drawings are intended to illustrate specific embodiments of the disclosure of the present specification. The designations of specific devices or the designations of specific signals/messages/fields shown in the drawings are for illustrative purposes only, and the technical features of this specification are not limited to the specific designations used in the drawings below.

FIG. 16 illustrates a first example of operation of a terminal and operation of an NTN network according to an embodiment of the disclosure of the present specification.

Of note, the example of FIG. 16 may also be an example of operations that comprehensively describes the example of FIG. 17 or the example of FIG. 20 below.

In step S1601, the NTN network may transmit satellite ephemeris information to the NTN UE. The satellite ephemeris information may be, for example, navigation information of a satellite. Specifically, the satellite ephemeris information may include information related to the satellite, such as the satellite's orbit, path, speed, position, etc.

In step S1602, the NTN UE may transmit UE location information or delay information to the NTN network. Here, delay information may refer to delay information associated with satellite signals. For example, the delay information may be information indicating a delay difference between a signal from a serving satellite received by the UE and a signal from a neighboring satellite received by the UE. In another example, the delay information may be information indicating a delay difference between signals from different satellites. Specifically, the delay information may be information indicating the difference between when the UE received a signal from a serving satellite and when the serving satellite transmitted that signal, and the difference between when the UE received a signal from a neighboring satellite and when the neighboring satellite transmitted that signal.

In step S1603, the NTN network may determine the SR. For example, the NTN network may calculate a size of the SR. For example, the NTN network may determine a size of the SR and a location of the SR. For example, the NTN network may calculate the size of the SR based on information received from the UE, as previously described in various examples.

In step S1604, the NTN network may transmit information about the SR to the NTN UE. Note that step S1604 may only be performed if the NTN UE determines on its own whether it is located within the SR. For example, in the example of FIG. 18 or the example of FIG. 20, where the NTN network determines whether the UE is located within the SR, step S1604 may be omitted.

Of note, for the examples of FIGS. 17 to 20, all or part of the operations according to the example of FIG. 16 may be utilized. For example, before the operations of the examples of FIGS. 17 through 20 are performed, step S1601 may be performed. For example, before the operations of the example of FIG. 17 and the example of FIG. 19 are performed, step S1602 or step S1604 may be performed. For example, in the example of FIG. 18 and the example of FIG. 20, step S1604 may be omitted. For example, in the example of FIG. 18 and the example of FIG. 20, step S1602 may be included in step S1801 or step S2001. For example, in the example of FIG. 18 and the example of FIG. 20, step S1603 may be included in step S1802 or step S2002. Specifically, in step S1802 or step S2002, the NTN network may determine whether the NTN UE is located within the SR after determining the SR according to step S1603.

In the following, the example of FIG. 17 and the example of FIG. 18 illustrate an example of a procedure when, depending on the location of the terminal, it is determined whether to perform a measurement on a target cell.

In the following, the example of FIG. 19 and the example of FIG. 20 illustrate an example procedure when multiple SMTC/MG or an increase in SMTC window length is considered in the measurement of a target cell.

In the following, the examples of FIGS. 17 and 18 will first be described in detail.

The following drawings are intended to illustrate specific embodiments of the disclosure of the present specification. The designations of specific devices or the designations of specific signals/messages/fields shown in the drawings are for illustrative purposes only, and the technical features of this specification are not limited to the specific designations used in the drawings below.

FIG. 17 illustrates a second example of operation of a terminal and operation of an NTN network according to an embodiment of the disclosure of the present specification.

In the example of FIG. 17, the device may determine that it is not within the SR. In this case, the device can either hold off on measuring until its location is within the SR, or it can attempt to measure based on a very large interval (e.g., one second).

If the device determines that it is in the SR, it can perform measurements on the target cell and report the measurement results to the NTN network.

In step S1701, the NTN network may transmit measurement information about the cell/beam/satellite to the NTN UE. Here, the measurement information for the cell/beam/satellite may include measurement information for the target cell, target beam, and/or target satellite for which the NTN UE is to perform the measurement. For example, the measurement information may include information such as the ID of the satellite, the ID of the beam, and/or the ID of the cell to be measured by the NTN UE, and the measurement information may include frequency information of the satellite, frequency information of the beam, and/or frequency information of the cell.

At step S1702, the NTN UE may determine whether the UE is located within the SR.

If it is determined that the UE is not located within the SR, the UE may withhold the measurement until its location is located within the SR, or it may attempt the measurement based on a very large interval (e.g., one second). If the measurement is withheld, the NTN UE may perform step S1701 again, as illustrated in FIG. 17.

If it is determined that the UE is located within the SR, step S1703 may be performed.

In step S1703, the NTN UE may perform measurements. For example, the NTN UE may perform measurements for a serving NTN network and a neighboring NTN network, based on one SMTC and/or MG.

In step S1704, the NTN UE may perform measurement reporting. For example, the NTN UE may transmit the results of the measurement performed in step S1703 to the NTN network.

The following drawings are intended to illustrate specific embodiments of the disclosure of the present specification. The designations of specific devices or the designations of specific signals/messages/fields shown in the drawings are for illustrative purposes only, and the technical features of this specification are not limited to the specific designations used in the drawings below.

FIG. 18 illustrates a third example of operation of a terminal and operation of an NTN network according to an embodiment of the disclosure of the present specification.

In the example of FIG. 18, if the network determines that the terminal is not within the SR, the network may not configure a separate measurement zone for target cell (e.g., neighbor cell) measurements.

If the network determines that the terminal is within the SR, the network may configure an SMTC for target cell measurement.

In step S1801, the NTN UE may transmit UE location information or delay information to the NTN network.

At step S1802, the NTN network may determine whether the UE is located within the SR.

If it is determined that the UE is not located within the SR, the NTN network may not establish a separate measurement zone for target cell measurements and may wait for step S1801 to be performed.

If it is determined that the UE is located within the SR, step S1803 may be performed.

In step S1803, the NTN network may trigger the measurement of the NTN UE, via signaling. For example, the NTN network may transmit triggering information to the UE. The triggering information may be an example of information that triggers the NTN network to perform a measurement of the NTN serving cell and/or the NTN neighbor cell throughout the disclosure of the present specification. For example, the NTN network may signal to the terminal via a message (e.g., a message such as *deriveSSB-IndexFromCell*) that the neighbor beam is measurable. The NTN network (e.g., serving beam/satellite) may separately signal to the terminal the information of the beam/satellite that should be measured (e.g., the information in Table 4).

In step S1804, the NTN UE may perform measurements. For example, the NTN UE may perform measurements for a serving NTN network and a neighboring NTN network, based on one SMTC and/or MG.

In step S1805, the NTN UE may perform measurement reporting. For example, the NTN UE may transmit the results of the measurement performed in step S1703 to the NTN network.

The following drawings are intended to illustrate specific embodiments of the disclosure of the present specification. The designations of specific devices or the designations of specific signals/messages/fields shown in the drawings are for illustrative purposes only, and the technical features of this specification are not limited to the specific designations used in the drawings below.

FIG. 19 illustrates a fourth example of operation of a terminal and operation of an NTN network according to an embodiment of the disclosure of the present specification.

For example, the example in FIG. 19 may be performed when the NTN UE is in an idle or inactive state.

In step S1901, the NTN network may transmit measurement information about the cell/beam/satellite to the NTN UE.

In step S1902, the NTN UE may determine whether the UE is located within the SR.

If the UE is determined to be located within the SR, step S1905 may be performed. The operation performed when the UE is determined to be located within the SR may be the same as the operation in the example of FIG. 17.

If it is determined that the UE is not located within the SR, step S1903 may be performed.

If the terminal determines that it is not within the SR, the terminal may, in step S1903, send a request message to the NTN network that multiple SMTC/MG or an increased SMTC window is required for the target cell/satellite/beam measurement.

If the terminal requests multiple SMTC/MGs, the terminal may also report to the NW the number of multiple SMTC/MGs that can be operated simultaneously. For example, in such a case, the terminal's request message may include the information shown in the example in Table 5, or the request message may be an existing capability message with the information shown in the example in Table 5. Alternatively, each of the information in the examples in Table 5 may be included in a separate message and sent to the NW.

**[Table 5]**

| |
|---|
| ```
{ ...
       Multiple MG/SMTC request = 1
       Number of Simultaneous MG/SMTC = 3
 }
``` |

In step S1903, the NTN UE may send a message to the NTN network requesting to establish multiple SMTC/MGs or an increased SMTC window. In step S1904, the NTN network may configure multiple SMTC/MGs or an increased SMTC window. The NTN network may transmit information about the multiple SMTC/MG configuration or the increased SMTC window to the NTN UE.

In step S1905, the NTN UE may perform measurements. For example, the NTN UE may perform measurements on the serving NTN network and the neighboring NTN network. Note that, in addition, if the NTN UE is in idle/inactive mode, the NTN UE may perform measurements on neighboring cells by appropriately shifting the SMTC set by the network.

In step S1906, the NTN UE may perform measurement reporting. For example, the NTN UE may transmit the results of the measurements performed in step S1905 to the NTN network.

The following drawings are intended to illustrate specific embodiments of the disclosure of the present specification. The designations of specific devices or the designations of specific signals/messages/fields shown in the drawings are for illustrative purposes only, and the technical features of this specification are not limited to the specific designations used in the drawings below.

FIG. 20 illustrates a fifth example of operation of a terminal and operation of an NTN network according to an embodiment of the disclosure of the present specification.

Of note, before step S2001 is performed, the NTN UE may receive measurement configuration for the NTN cell from the NTN serving cell that include measurement configuration for the NTN serving cell. For example, the measurement configuration for the NTN cell may include measurement configuration for the NTN serving cell, and may further include measurement configuration for other NTN cells.

In step S2001, the NTN UE may transmit UE location information or delay information to the NTN network. Here, the delay information may be, for example, propagation delay information. Note that delay information and propagation delay information may be used as terms having same meaning in the disclosure of the present specification.

The NTN UE may obtain the delay information in the following example manner. The examples of how the NTN UE obtains delay information may be applied to the delay information described in the various examples of the disclosure of the present specification.

For example, the NTN UE may obtain the delay information based on location information of the NTN UE and the location of one or more NTN cells, including the NTN serving cell. In a specific example, the NTN UE may determine the delay information based on orbital (position) information of at least one NTN satellite (e.g., NTN satellites, including neighboring satellites) received from the NTN serving cell (e.g., ephemeris information of the at least one NTN satellite) and location information of the NTN UE (e.g., location information of the terminal obtained by the terminal using a Global Navigation Satellite System (GNSS)).

As a concrete example, an NTN serving cell (NTN serving satellite) may provide orbital information of a neighboring satellite to an NTN UE. The NTN UE may then calculate the distance between the UE and the neighboring satellite by using the UE's location and the location of the received satellite. Based on the calculated distance, the NTN UE may calculate the absolute value of the propagation delay, i.e., in NTN communications, the NTN UE may calculate the time for the signal to arrive (propagation delay) based on the distance of the NTN UE from the satellites. For example, the NTN UE may calculate the distance between the UE and the NTN serving cell based on the location of the UE and the location of the NTN serving cell. Then, the NTN UE may calculate the time it takes for the radio waves to be transmitted from the satellite to the terminal by dividing the distance between the UE and the NTN serving cell by the speed of the radio waves. The NTN UE may then calculate the propagation delay difference between the serving cell and its neighbors. For example, in conventional TN communications, the delay difference may be calculated after the UE directly receives the signal from the neighboring cell, but in NTN communications, the delay difference may be calculated in a different way than in TN communications.

In other words, the NTN UE can calculate the propagation delay difference using the orbital information (e.g., location information) of nearby satellites (e.g., neighboring satellites) transmitted by the NTN serving cell. The NTN UE may then transmit the delay information to the NTN serving cell. The delay difference between the neighboring satellite and the NTN UE can be determined by dividing the distance between the satellite and the NTN UE by the speed of light (e.g., the speed of light). For example, the time taken for radio waves to be transmitted from a satellite to an NTN UE may be the distance between the satellite and the NTN UE/speed of radio waves. Since the speed of radio waves is known in the art, once the NTN UE obtains the distance between the satellite and the NTN UE, the NTN UE may determine the time (delay) for the radio waves to be transmitted from the satellite to the terminal.

Here, the NTN UE may determine the distance between the satellite and the terminal based on the location of the satellite and the location of the terminal (e.g., UE).

For example, an NTN UE may receive information about the position of a satellite from a serving NTN satellite. If the satellite is a low Earth orbit (LEO) satellite, the position of the satellite changes over time, so the NTN serving cell may provide the NTN UE with information about the position of the satellite over time (orbital information).

For example, the NTN UE may determine the location of the UE by utilizing the GNSS capability embedded in the UE. Here, the NTN UE may determine the location of the UE by communicating with a GNSS satellite. Here, the NTN UE may obtain the location of the NTN UE from a GNSS satellite rather than from an NTN satellite. Unlike GNSS satellites for location, NTN satellites may be for data communication.

In other words, when the NTN base station transmits the location information of the neighboring satellites to the NTN UE, the NTN UE can calculate the delay with the neighboring satellites and the difference between the delay with the neighboring satellites and the delay with the NTN serving cell satellite.

In step S2002, the NTN network may determine whether the UE is located within the SR.

If the UE is determined to be located within the SR, step S2003 may be performed. The operation performed when the UE is determined to be located within the SR may be the same as the operation in the example of FIG. 18.

If it is determined that the UE is not located within the SR, step S2004 may be performed.

If the NTN network determines that the terminal is not in the SR, it may determine that the terminal needs multiple SMTC/MGs or an increased SMTC window to measure neighboring cells. In this case, the NTN network may calculate/utilize the delay between the NTN network and other satellites to set multiple SMTC/MG or increased SMTC window for the terminal.

For example, when satellite 1 (e.g., a serving satellite) and satellite 2 (a neighboring satellite) transmit SSB at the same time, the time at which the terminal receives satellite 1's SSB and the time at which it receives satellite 2's SSB may be different due to the delay difference between satellite 1 and satellite 2. For example, the time at which the SSB signal of satellite 1 is received may be t=t0~t1 and the time at which the SSB signal of satellite 2 is received may be t=t1~t2 or t2~t3. Here, t0<t1<t2<t3, and t0~t3 can all mean arbitrary time points. In conventional TN, the delay difference between base stations is not significant, so a UE can receive two signals from different base stations approximately between t=t0 and t1. Therefore, if the network sets the SMTC window corresponding to the t0 to t1 window, the UE can measure the signals from both base stations based on one SMTC.

In NTN, the UE may receive SSB such as SSB signal from satellite 1: t=t0 to t1 SSB signal from satellite 2: t=t1 to t2. In this case, the NTN network may configure an increased SMTC window for t0 to t2. In other words, the increased SMTC window here may be an increased SMTC window for measuring the SSB signal of satellite 1 (e.g., including the time interval from t0 to t1). Alternatively, the UE may receive the SSB signal of satellite 1: t=t0 to t1 and the UE may receive the SSB signal of satellite 2: t=t2 to t3. In this case, the NTN network may configure multiple SMTCs. For example, the NTN network may configure multiple SMTCs, such as an SMTC for the time interval t0 to t1 and an SMTC for the time interval t2 to t3. In other words, the NTN network may configure an increased SMTC window when the magnitude of the delay difference between the NTN network (e.g., a serving satellite) and another satellite is below a threshold, and multiple SMTCs when the magnitude of the delay difference is above the threshold.

In step S2003, the NTN network may, via signaling, trigger the measurement of the NTN UE. For example, the NTN network may signal to the terminal via a message (e.g., a message such as *deriveSSB-IndexFromCell*) that a neighboring beam is measurable. The NTN network (e.g., serving beam/satellite) may separately signal to the terminal the information of the beam/satellite that should be measured (e.g., the information in Table 4).

In step S2004, the NTN network may configure multiple SMTC/MG or an increased SMTC window. The NTN network may transmit information about the multiple SMTC/MG configuration or the increased SMTC window to the NTN UE. The NTN network may perform step S2004 simultaneously with step S2003. For example, the NTN network may include the information about the multiple SMTC/MG or the increased SMTC window within the message sent in step S2003.

In step S2005, the NTN UE may perform measurements. For example, the NTN UE may perform measurements for the serving NTN network and the neighboring NTN network.

In step S2006, the NTN UE may perform measurement reporting. For example, the NTN UE may transmit the results of the measurements performed in step S2005 to the NTN network.

The disclosure of the present specification proposes non-terrestrial network (NTN) based communications in a 5G NR network. For example, the disclosure of the present specification is directed to terminal and/or network operations related to measurement of satellite signals and/or airplane signals in the NTN of a 5G NR network. In the NTN of a 5G network, the satellite or air vehicle may be used for a variety of purposes. For example, in an NTN of a 5G network, a satellite or air vehicle may be utilized as a base station, relay, or repeater.

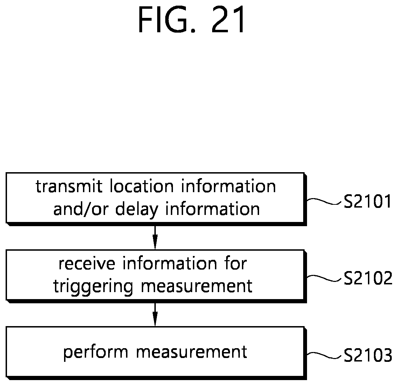

Hereinafter, referring to FIG. 21, an example of an operation of a terminal according to the disclosure of the present specification will be described. The operation of the terminal described below may include the contents described above through various examples.

The following drawings are intended to illustrate specific embodiments of the disclosure of the present specification. The designations of specific devices or the designations of specific signals/messages/fields shown in the drawings are for illustrative purposes only, and the technical features of this specification are not limited to the specific designations used in the drawings below.

**FIG. 21** **illustrates an example of operation of a terminal according to an embodiment of the disclosure of the present specification.**

FIG. 21 illustrates an example of the operation of a terminal according to the disclosure herein. What is shown in FIG. 14 is only an example, and the scope of the disclosure of the present specification is not limited by FIG. 14. Although the example of FIG. 14 shows only an example of the operation of a terminal, it is only an example, and the following description of the example of FIG. 14 may also apply to the operation of the NTN network described above.

The terminal may perform operations according to various examples previously described in the disclosure of the present specification (e.g., the disclosure of the present specification, examples 1 to 3 of the disclosure of the present specification, etc.).

For reference, in the example of FIG. 21, step S2101, step S2102, and step S2103 are shown to be performed sequentially. However, this is for illustrative purposes only. The order in which step S2101, step S2102, and step S2103 are performed is not limited by the order shown in FIG. 21. For example, step S2101, step S2102, and step S2103 may be performed simultaneously. For example, step S2101 may not be performed.

In the example of FIG. 21, the terminal may be a terminal that supports NTN communications. In the example of FIG. 21, the NTN network may be an NTN serving cell, an NTN serving satellite, or the like. Hereinafter, as an example of an NTN network, the operation of an NTN serving cell will be described, and the operation performed by the NTN serving cell can be equally performed by an NTN serving satellite.

In step S2101, the terminal may transmit location information and/or delay information to the NTN serving cell. The delay information may be information about the delay between the signal received from the NTN serving cell and the signal received from the NTN neighbor cell.

Of note, before step S2101 is performed, the NTN network may transmit satellite ephemeris information to the terminal, as shown in step S1601 in the example of FIG. 16.

The location information and/or delay information of the UE may be used by the NTN serving cell to determine whether the UE is located in a boundary area. For example, based on the UE's location information and/or delay information, the NTN serving cell may determine an area C (e.g., SR) according to the methods described in various examples of the disclosure. Of note, area C may also be referred to as a "boundary area".

In step S2102, the terminal may receive information from the NTN serving cell that triggers the measurement. For example, the terminal may receive triggering information from the NTN serving cell that triggers a measurement to be performed on the NTN neighbor cell based on a measurement configuration for the NTN serving cell. Here, the measurement configuration for the NTN serving cell may include SMTC information for the NTN serving cell (e.g., including information related to the SMTC, such as an SMTC window). Further, the measurement configuration for the NTN serving cell may include MG information for the NTN serving cell (e.g., including information such as MG length, MG Repetition Period, etc.). Of note, the terminal may receive the measurement configuration for the NTN serving cell from the NTN serving cell before performing step S2101.

For example, the NTN serving cell may determine that the UE is located in a boundary area (area C or SR in various examples of the disclosure of the present specification) of the service area of the NTN serving cell and the service area of the NTN neighbor cell. Based on this determination, the NTN serving cell may transmit triggering information to the UE, that is, triggering information may be received from the NTN serving cell based on the UE being located in the boundary area. Here, the boundary area may be an area where both measurements for the NTN serving cell and measurements for NTN neighbors are possible, based on the measurement configuration for the NTN serving cell. In other words, the boundary area may refer to the area C previously described in the examples of FIGS. 11 to 14.

In another example, the NTN serving cell may determine that the UE is not located in a boundary area (area C or SR in various examples of the disclosure of the present specification) between the service area of the NTN serving cell and the service area of the NTN neighbor cell. Based on this determination, the NTN serving cell may transmit the plurality of SMTC/MG information or updated SMTC information to the NTN UE, including the triggering information, in the same manner as step S1904 or step S2004 in the example of FIG. 19 or FIG. 20 described above. For example, based on this determination, the triggering information may further include updated measurement setup information. Here, the updated measurement configuration may include: i) updated SMTC information that includes an increased SMTC window to perform measurements based on the SSB of the NTN neighbor cell, or ii) a plurality of SMTC or measurement gap information to measure both the NTN neighbor cell and the NTN serving cell.

Of note, before step S2101 or step S2102 is performed, the terminal may receive measurement configuration for the NTN serving cell from the NTN serving cell. For example, the terminal may receive triggering information from the NTN serving cell that triggers the terminal to perform measurements on the NTN neighbor cells based on the measurement configuration for the NTN serving cell.

Here, the measurement configuration may include SMTC information to perform the measurement based on the SSB of the NTN serving cell.

Note that the triggering information may include information about neighboring cells that the UE can measure. For example, the triggering information may include information such as the examples in Table 4.

Note that step S2102 may not be performed. For example, step S2102 may not be performed, and an operation of the terminal as described in the example of FIG. 17 or the example of FIG. 19 may be performed. In other words, the terminal may perform an operation to determine whether the terminal is located within the SR. For example, instead of step S2102, steps S1701 and S1702 of the example of FIG. 17 or steps S1901 and S1902 of the example of FIG. 19 may be performed.

In step S2103, the terminal may perform a measurement.

For example, the terminal may perform measurements on the NTN neighbor cell based on the measurement configuration for the NTN serving cell. For example, if the terminal is located in a boundary area, the terminal may receive triggering information from the NTN network that triggers the terminal to perform measurements on the NTN neighbor based on the measurement configuration for the NTN serving cell. In this case, the terminal may perform measurements on the NTN neighbor based on the measurement configuration for the NTN serving cell.

In another example, the terminal may perform measurements on an NTN neighbor cell based on the updated measurement configuration. For example, if the terminal is not located in a boundary area, the terminal may receive triggering information from the NTN network that includes updated measurement configuration. In this case, the terminal may perform measurements on the NTN neighbor cells based on the updated measurement configuration.

After performing step S2103, the terminal may report the measurement results to the NTN network.

As described in the disclosure herein with reference to various examples, the terminal can effectively and efficiently perform NTN-based communication. For example, as described in the disclosure herein with reference to various examples, when the terminal measures signals from nearby satellites/beams, a decrease in system performance may be avoided, measurement time triggering may be performed efficiently, and power consumption of the terminal may be reduced. For example, depending on the location of the UE performing NTN communications, the UE may measure the signals of neighboring cells based on the measurement configuration of the serving cell, or may measure the signals of neighboring cells based on changed measurement configuration (e.g., increased SMTC).

For reference, the operation of the terminal (e.g., NTN UE, UE, etc.) described in the disclosure of the present specification may be implemented by the devices of FIGS. 1 to 3 described above. For example, the terminal may be the first device 100 or the second device 200 of FIG. 1. For example, the operation of a terminal described in the disclosure of the present specification may be processed by one or more processors 102 or 202. The operation of the terminal described in the disclosure of the present specification may be stored in one or more memories 104 or 204 in the form of an instruction/program (e.g., instruction and executable code) executable by the one or more processors 102 or 202. The one or more processors 102 or 202 may control the one or more memories 104 or 204 and one or more transceivers 105 or 206 and execute instructions/programs stored in the one or more memories 104 or 204 to perform the operation of a terminal described in the disclosure of the present specification.

In addition, instructions for performing the operation of the terminal described in the disclosure of the present specification may be stored in a non-volatile computer-readable storage medium. The storage medium may be included in the one or more memories 104 or 204. In addition, the instructions recorded in the storage medium may be executed by the one or more processors 102 or 202 to perform the operation of a terminal described in the disclosure of the present specification.

For reference, the operations of the NTN network (e.g., NG-RAN, gNB, NTN satellite, NTN serving satellite, NTN neighbor satellite, regenerative satellite, transparent satellite-gateway-gNB, etc.) described in the disclosure of the present specification may be implemented by the devices of FIGS. 1 to 3 which will be described below. For example, the NTN network may be the first device 100a or the second device 100b of FIG. 1. For example, the operation of the NTN network described in the disclosure of the present specification may be processed by one or more processors 102 or 202. The operation of the NTN network described in the disclosure of the present specification may be stored in one or more memories 104 or 204 in the form of an instruction/program (e.g., instruction and executable code) executable by the one or more processors 102 or 202. The one or more processors 102 or 202 may control the one or more memories 104 or 204 and one or more transceivers 106 or 206 and execute instructions/programs stored in the one or more memories 104 or 204 to perform the operation of the NTN network described in the disclosure of the present specification.

In addition, the instructions for performing the operation of the NTN network described in the disclosure of the present specification may be stored in a non-volatile (or non-transitory) computer-readable storage medium. The storage medium may be included in the one or more memories 104 or 204. In addition, the instructions recorded in the storage medium may be executed by the one or more processors 102 or 202 to perform the operation of the NTN network described in the disclosure of the present specification.

Although preferred embodiments have been described above, the disclosure of the present specification is not limited to such specific embodiments and thus can be modified, changed, or improved in various manners within the spirt of the disclosure of the present specification and the scope of the clams.

Although methods are described as a series of steps or blocks based on a flowchart in the exemplary system described above, they are not limited to the order of the described steps, and some steps may occur in a different order or simultaneously with other steps as described above. In addition, those skilled in the art will understand that the steps shown in the flowchart are not exclusive, and that other steps may be included or that one or more steps of a flowchart may be deleted without affecting the scope of rights.

The claims described herein may be combined in various ways. For example, the technical features of the method claims of the disclosure of the present specification may be combined and implemented as an apparatus, and the technical features of the apparatus claims of the disclosure of the present specification may be combined and implemented as a method. In addition, the technical features of the method claims of the disclosure of the present specification and the technical features of the apparatus claims may be combined and implemented as an apparatus, and the technical features of the method claims of the present disclosure and the technical features of the apparatus claims may be combined and implemented as a method.

## Claims

1. A method for performing communication related to a non-terrestrial network (NTN), the method performed by a user equipment (UE) and comprising:
receiving a measurement configuration for an NTN cell including a measurement configuration for the NTN serving cell, from an NTN serving cell;
transmitting at least one of location information of the UE or propagation delay information, to the NTN serving cell,
wherein the propagation delay information is obtained based on location information of the UE and location of one or more NTN cells including the NTN serving cell;
receiving triggering information from the NTN serving cell that triggers to perform measurement for the NTN serving cell and/or the NTN neighbor cell based on measurement configuration for the NTN cell,
wherein the triggering information is received from the NTN serving cell, based on that the UE is located in a boundary area of a service area of the NTN serving cell and a service area of the NTN neighbor cell; and
performing measurement for the NTN neighbor cell, based on measurement configuration for the NTN serving cell,
wherein the location information of the UE or the propagation delay information is used by the NTN serving cell to determine whether the UE is located in the boundary area.

2. The method of claim 1,
wherein the boundary area is an area in which both measurement for the NTN serving cell and measurement for the NTN neighbors are possible, based on the measurement configuration for the NTN serving cell.

3. The method of claim 1,
wherein the measurement configuration for the NTN cell includes Synchronization Signal (SS)/ Physical Broadcast Channel (PBCH) Block (SSB) Measurement Time Configuration (SMTC) information for performing a measurement based on a SSB of the NTN serving cell.

4. The method of claim 1,
based on the UE is not located in the boundary area, the triggering information further includes updated measurement configuration,
wherein the updated measurement configuration includes: i) updated SMTC information including an increased SMTC window to perform measurement based on the SSB of the NTN neighboring cell, or ii) information related to a plurality of SMTC or a plurality of measurement gap to measure both the NTN neighboring cell and the NTN serving cell.

5. The method of claim 4,
based on that the triggering information further includes the updated measurement configuration, wherein the measurement for the NTN neighbor cell is performed based on the updated measurement configuration.

6. The method of claim 1,
wherein the triggering information includes information about neighboring cells that can be measured by the UE.

7. The method of claim 1, further comprising:
reporting information about the performed measurement to the NTN serving cell.

8. A User Equipment (UE) performing communication related to a Non-Terrestrial Network (NTN), the UE comprising:
at least one transceiver;
at least one processor; and
at least one memory that stores instructions and is operably electrically connectable with the at least one processor,
wherein operations performed based on the instructions being executed by the at least one processor include:
receiving a measurement configuration for an NTN cell including a measurement configuration for the NTN serving cell, from an NTN serving cell;
transmitting at least one of location information of the UE or propagation delay information, to the NTN serving cell,
wherein the propagation delay information is obtained based on location information of the UE and location of one or more NTN cells including the NTN serving cell;
receiving triggering information from the NTN serving cell that triggers to perform measurement for the NTN serving cell and/or the NTN neighbor cell based on measurement configuration for the NTN cell,
wherein the triggering information is received from the NTN serving cell, based on that the UE is located in a boundary area of a service area of the NTN serving cell and a service area of the NTN neighbor cell; and
performing measurement for the NTN neighbor cell, based on measurement configuration for the NTN serving cell,
wherein the location information of the UE or the propagation delay information is used by the NTN serving cell to determine whether the UE is located in the boundary area.

9. The UE of claim 8,
wherein the UE is an autonomous driving device that communicates with at least one of a mobile terminal, a network, and an autonomous vehicle other than the UE.

10. An apparatus in mobile communication, the apparatus comprising:
at least one processor; and
at least one memory that stores instructions and is operably electrically connectable with the at least one processor;
wherein operations performed based on the instructions being executed by the at least one processor include:
identifying a measurement configuration for an NTN cell including a measurement configuration for the NTN serving cell, from an NTN serving cell;
generating at least one of location information of the at least one processor or propagation delay information, to the NTN serving cell,
wherein the propagation delay information is obtained based on location information of the at least one processor and location of one or more NTN cells including the NTN serving cell;
identifying triggering information from the NTN serving cell that triggers to perform measurement for the NTN serving cell and/or the NTN neighbor cell based on measurement configuration for the NTN cell,
wherein the triggering information is identified from the NTN serving cell, based on that the at least one processor is located in a boundary area of a service area of the NTN serving cell and a service area of the NTN neighbor cell; and
performing measurement for the NTN neighbor cell, based on measurement configuration for the NTN serving cell,
wherein the location information of the at least one processor or the propagation delay information is used by the NTN serving cell to determine whether the UE is located in the boundary area.

11. A non-transitory computer readable storage medium having recorded instructions,
wherein the instructions, based on being executed by one or more processors, cause the one or more processors to perform operations comprising:
identifying a measurement configuration for an NTN cell including a measurement configuration for the NTN serving cell, from an NTN serving cell;
generating at least one of location information of the at least one processor or propagation delay information, to the NTN serving cell,
wherein the propagation delay information is obtained based on location information of the at least one processor and location of one or more NTN cells including the NTN serving cell;
identifying triggering information from the NTN serving cell that triggers to perform measurement for the NTN serving cell and/or the NTN neighbor cell based on measurement configuration for the NTN cell,
wherein the triggering information is identified from the NTN serving cell, based on that the at least one processor is located in a boundary area of a service area of the NTN serving cell and a service area of the NTN neighbor cell; and
performing measurement for the NTN neighbor cell, based on measurement configuration for the NTN serving cell,
wherein the location information of the at least one processor or the propagation delay information is used by the NTN serving cell to determine whether the UE is located in the boundary area.

12. A method for performing performs communications related to a non-terrestrial network (NTN), the method performed by a NTN serving cell, the method comprising:
transmitting a measurement configuration for an NTN cell including a measurement configuration for the NTN serving cell, to a User Equipment (UE);
receiving at least one of location information of the UE or propagation delay information, from the UE,
wherein the propagation delay information is obtained based on location information of the UE and location of one or more NTN cells including the NTN serving cell;
determining whether the UE is located in the boundary area, based on the location information of the UE or the propagation delay information; and
transmitting triggering information from the NTN serving cell that triggers to perform measurement for the NTN serving cell and/or the NTN neighbor cell based on measurement configuration for the NTN cell, to the UE,
wherein the triggering information is transmitted to the UE, based on that the UE is located in a boundary area of a service area of the NTN serving cell and a service area of the NTN neighbor cell.

13. The method of claim 12,
wherein the boundary area is an area in which both measurement for the NTN serving cell and measurement for the NTN neighbors are possible, based on the measurement configuration for the NTN serving cell.

14. The method of claim 12, further comprising:
based on the UE is not located in the boundary area, updating the triggering information,
wherein the triggering information further includes updated measurement configuration,
wherein the updated measurement configuration includes: i) updated SMTC information including an increased SMTC window to perform measurement based on the SSB of the NTN neighboring cell, or ii) information related to a plurality of SMTC or a plurality of measurement gap to measure both the NTN neighboring cell and the NTN serving cell.

15. The method of claim 12, further comprising:
receiving a measurement report from the UE.
